# EUROPEAN PATENT APPLICATION

(11) **EP 3 795 230 A1**
(43) Date of publication of application: **24.03.2021**
(21) Application number: 19198455.8
(22) Date of filing: 19.09.2019
(51) Int. Cl.: B01D 46/00, B01D 46/10, B01D 50/00

(54) **FILTER DEVICE**

(71) Applicant: X'Pole Precision Tools Inc., Taoyuan City (TW)
(72) Inventor: Chen, Bach Pangho, Claremont, CA California 91711 (US)
(74) Representative: 2K Patentanwälte Blasberg Kewitz & Reichel

(57) **Abstract**

An exhaust filter device (10) comprises a filter chamber (11) and a gas permeable filter (14), the filter chamber (11) comprises an air inlet (12) and an air outlet (13), the air inlet (12) is connected to a dust filter device (20) and receives an airflow (21) that flows in from the dust filter device (20). The gas permeable filter (14) is disposed in the filter chamber (11), and comprises convex portions (141, 142) and concave portions (143, 144) on a side of the gas permeable filter (14) facing the air inlet (12). The convex portions (141, 142) disposed at interval and the concave portions (143, 144) respectively disposed between two of the adjacent convex portions (141, 142). The gas permeable filter (14) divides the airflow into a first air current (211) directly flowing to the air outlet (13) through the gas permeable filter (14), and a second air current (212) flowing along a surface of at least one of the convex portions (141, 142) and the concave portions (143, 144) and flowing to the air outlet (13) through the gas permeable filter (14).

## Description

### FIELD OF THE INVENTION

The present invention relates to an exhaust filter device, and more particularly to an exhaust filter device implemented with a dust filter device.

### BACKGROUND OF THE INVENTION

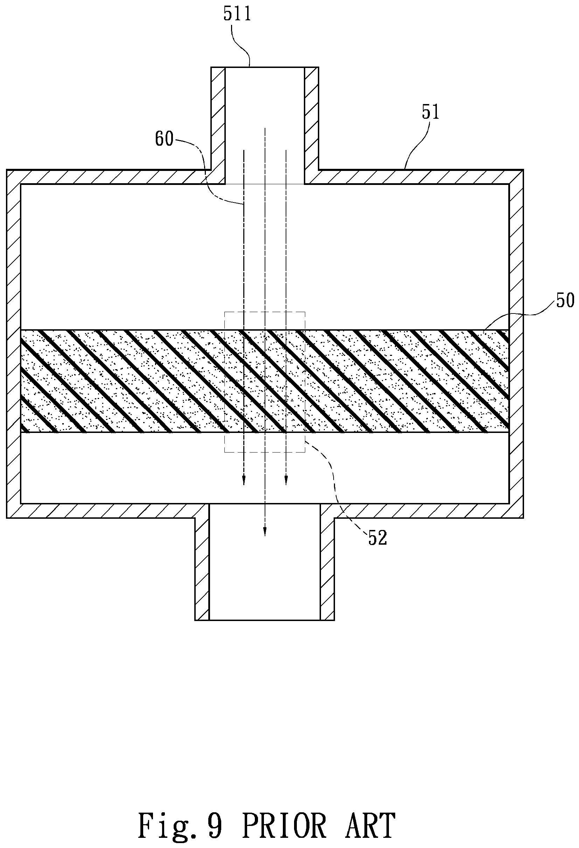

As disclosed in TW 1409047, TW 1637717, TW 1637718, and CN102475523, the conventional dust suction devices still need a filter 50 to filter discharged gas at the end of the dust filtering process. However, in the drawings of the foregoing patents, it is clearly understandable that the filter 50 used in the prior implementations has a flat plate shape, and the filter 50 is disposed directly in an exhaust chamber 51, as depicted in FIG. 9. It is clearly understandable from FIG. 9 that, one side surface of the filter 50 is directly facing an air inlet 511 of the exhaust chamber 51, even though a gas 60 is about to be discharged through the exhaust chamber 51, the gas 60 still has a certain air pressure, the gas 60 will pass through only a portion of the filter 50 directly facing the air inlet 511 without being guided by an external force, and the portion is an area 52 as indicated in FIG. 9. Thus, when the gas 60 contains fine dust that has not been filtered, the portion of the filter 50 facing the air inlet 511 will quickly accumulate fine dust and lose its function. However, it is known from the foregoing that the gas 60 only passes through the portion of the filter 50, causing a portion of the filter 50 that does not have the gas 60 passing through is not effectively used, resulting in waste. Moreover, if the foregoing structure is used for industrial dust suction, a large amount of fine dust will greatly accelerate the failure of the filter 50.

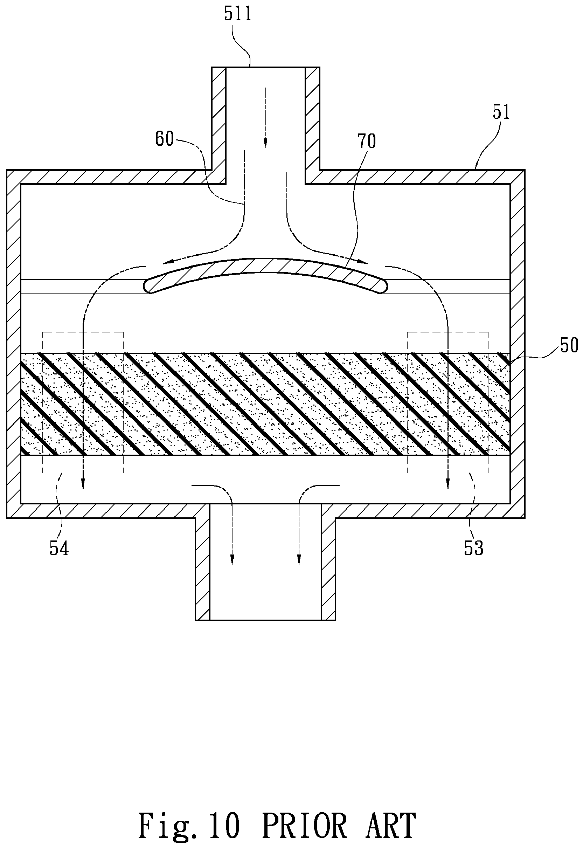

According to the above, although there are two solutions to solve the above problems, there are still defects in the two solutions that need to be improved. Further, one of the two solutions is that a distance between the air inlet 511 and the filter 50 is increased, to make a spacing between the air inlet 511 and the filter 50 1.6 times greater than a length of a long side of the filter 50, but this solution will cause a volume of the exhaust chamber 51 to be too large and does not meet the requirements of many users. Moreover, another solution is to dispose a deflector 70 between the air inlet 511 and the filter 50. As shown in FIG. 10, the deflector 70 generally does not have the property of allowing gas to penetrate. Although the deflector 70 can guide the gas 60, the deflector 70 actually only changes positions of the filter 50 where the gas 60 passes through, and the guided gas 60 still only passes through partial portions of the filter 50, as shown by areas 53, 54 indicated in FIG. 10, the problem that the filter 50 being easily accumulated with fine dust densely and partially remains unresolved. In addition, the disposition of the deflector 70 further causes the structure of the exhaust chamber 51 to become more complicated, and the filter 50 will be blocked partially by the deflector 70 without being used for dust filtering.

Furthermore, although the aforementioned CN102475523A discloses a dust collecting device with a self-cleaning filter, the patent actually shakes off the dust on the filter 50 through an additionally disposed vibration cleaning structure, such method can only be applied to a material of the filter 50 that can generate vibration, and it cannot solve the problem that the dust is easily accumulated locally.

### SUMMARY OF THE INVENTION

A main object of the present invention is to solve the problem that the conventional structures do not have air deflecting design, causing the filtering equipment to be prone to local and dense accumulation of dust.

This problem is solved by an exhaust filter device as claimed by claim 1. Further advantageous embodiments are the subject-matter of the dependent claims.

In order to achieve the above object, the present invention provides an exhaust filter device, comprising a filter chamber and a gas permeable filter, the filter chamber comprises an air inlet and an air outlet, the air inlet is connected to a dust filter device and receives an airflow to be filtered that flows in from the dust filter device. The gas permeable filter is disposed in the filter chamber, and a plurality of convex portions and a plurality of concave portions on a side of the gas permeable filter facing the air inlet, the plurality of convex portions are disposed at interval and the plurality of concave portions are respectively disposed between any two of the adjacent convex portions. The gas permeable filter divides the airflow to be filtered into a first air current directly flowing to the air outlet through the gas permeable filter, and a second air current flowing along a surface of at least one of the convex portions and the concave portions and flowing to the air outlet through the gas permeable filter.

In one embodiment, the air inlet defines a projection range facing the gas permeable filter, and a height of one of the convex portions located in the projection range is higher than heights of the convex portions not located in the projection range.

In one embodiment, the heights of the convex portions are the same.

In one embodiment, the exhaust filter device comprises a filter disposed on a side of the gas permeable filter facing the air outlet. Further, a filtration efficiency of the filter is more than 90%.

In one embodiment, the gas permeable filter is formed with a plurality of irregularly arranged holes.

In one embodiment, the convex portions and the concave portions are arranged in an MxN matrix, M is a sum of the convex portions and the concave portions in a same column, and N is a sum of the convex portions and the concave portions in a same row, the convex portions of any two adjacent rows are staggered, and the convex portions of any two adjacent columns are staggered.

In one embodiment, each of the convex portions and one of the concave portions adjacent to the convex portion form a continuous curved surface, and the continuous curved surface is based on a sinusoidal configuration.

In one embodiment, the convex portions are respectively a curved surface structure, and the concave portions are respectively formed by a plane of the gas permeable filter.

In one embodiment, the convex portions are respectively a pyramid structure, and the concave portions are respectively a curved surface structure.

In one embodiment, the convex portions are respectively a pyramid structure, the concave portions are respectively formed by a surface of the gas permeable filter, and a joint of each of the convex portions and one of the concave portions adjacent to the convex portion is an arcuate surface.

Through the foregoing implementation, the present invention has the following features compared with the prior art, the gas permeable filter of the present invention is provided with the convex portions and the concave portions on the side facing the air inlet, so that when the airflow to be filtered flows toward the gas permeable filter, in addition to a portion of the airflow to be filtered penetrating directly, a remaining portion is further guided by at least one of the convex portions and the concave portions; as a result, when the airflow to be filtered flows through the gas permeable filter, a flow range of the airflow to be filtered is no longer limited to local areas, but the airflow to be filtered flows over a wider range, thereby avoiding the problem of locally densely accumulating dust. In addition, if the gas permeable filter of the present invention is used in combination with the filter, when the airflow to be filtered flows through the gas permeable filter, it will flow toward the filter with a larger flow range, so that each area of the filter can achieve filtration of the airflow to be filtered flowing through the gas permeable filter.

### BRIEF DESCRIPTION OF THE DRAWINGS

FIG. 1 is a schematic view of the structure of a first embodiment of an exhaust filter device of the present invention;
FIG. 2 is a schematic view of the structure of a second embodiment of the exhaust filter device of the present invention;
FIG. 3 is a schematic view of the structure of a third embodiment of the exhaust filter device of the present invention;
FIG. 4 is a schematic view of the structure of a fourth embodiment of the exhaust filter device of the present invention;
FIG. 5 is a top view of the structure of a fifth embodiment of the exhaust filter device of the present invention;
FIG. 6 is a schematic view of the structure of a sixth embodiment of the exhaust filter device of the present invention;
FIG. 7 is a schematic view of the implementation of the first embodiment of the exhaust filter device of the present invention;
FIG. 8 is a schematic view of the implementation of a seventh embodiment of the exhaust filter device of the present invention;
FIG. 9 is a first schematic view of the implementation of a conventional structure; and
FIG. 10 is a second schematic view of the implementation of the conventional structure.

### DETAILED DESCRIPTION OF THE PREFERRED EMBODIMENTS

The detailed description and technical content of the present invention will now be described with reference to the accompanying drawings as follows.

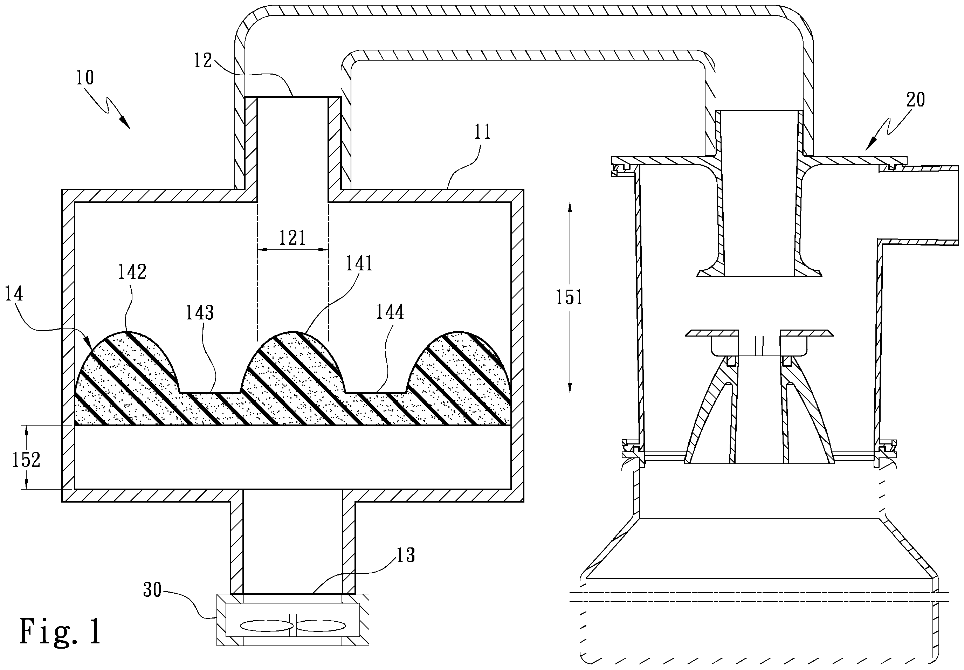

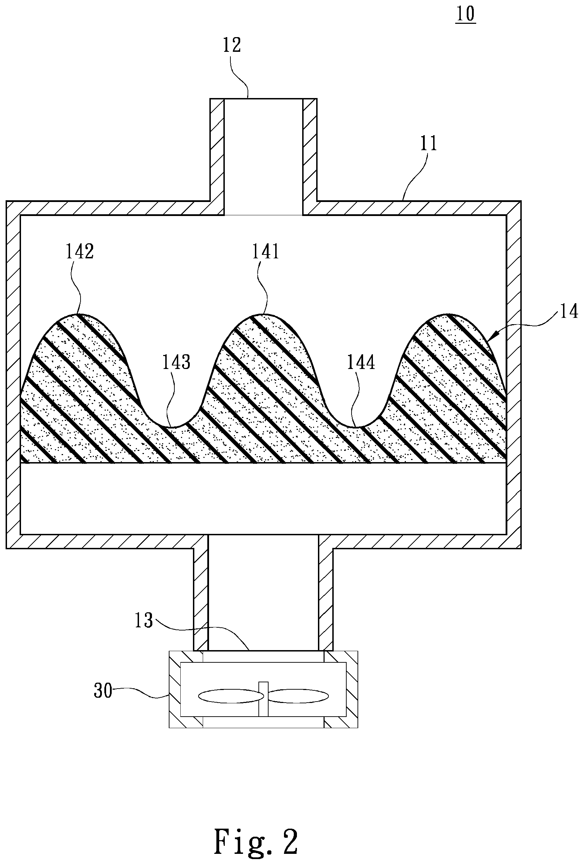

Please refer to FIGS. 1 and 2, the present invention provides an exhaust filter device 10, the exhaust filter device 10 is implemented with a dust filter device 20, and the dust filter device 20 can be a cyclonic dust filter device. Moreover, the exhaust filter device 10 comprises a filter chamber 11 and a gas permeable filter 14 disposed in the filter chamber 11, and the filter chamber 11 comprises an air inlet 12 and an air outlet 13. Wherein the air outlet 13 can directly communicate with an external space or can be connected to an air extracting device 30 according to the implementation. Further, the gas permeable filter 14 is formed with a plurality of irregularly arranged holes. For example, the gas permeable filter 14 can be a sponge. Between the gas permeable filter 14 and the air inlet 12 comprises a first spacing 151, and between the gas permeable filter 14 and the air outlet 13 comprises a second spacing 152. In one embodiment, a length of the first spacing 151 is shorter than a length of a long side of the gas permeable filter 14.

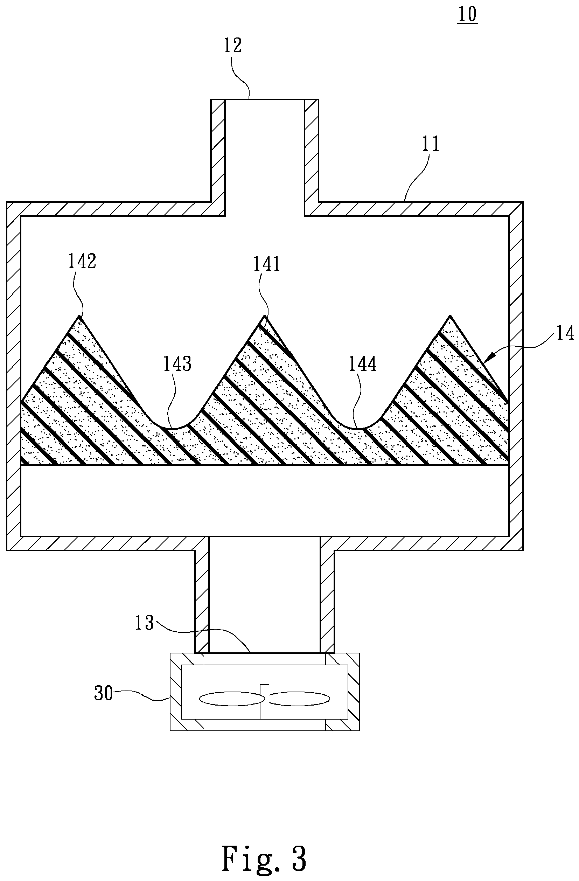

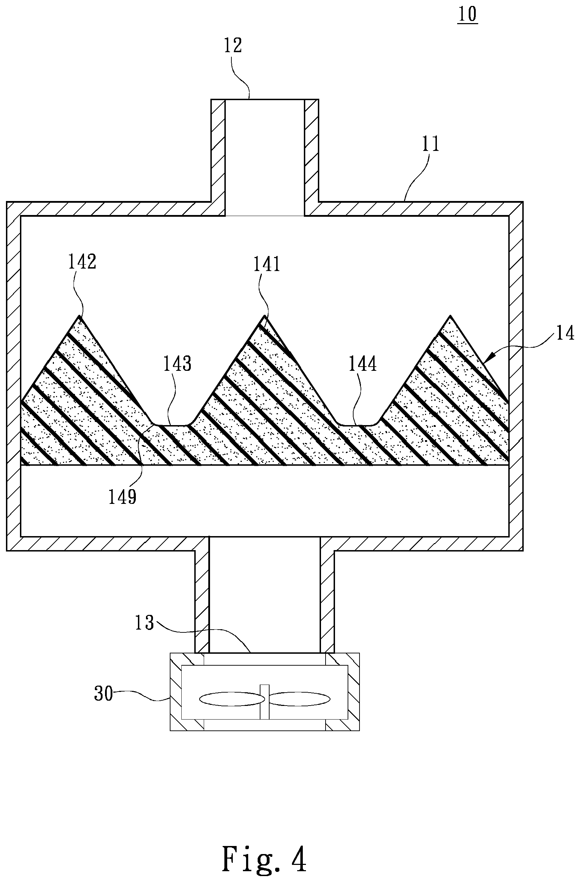

Please refer to FIG. 1 again, a side of the gas permeable filter 14 facing the air inlet 12 is defined as a windward side, and comprises a plurality of convex portions 141, 142 disposed at interval, and a plurality of concave portions 143, 144 respectively disposed between any two of the convex portions 141, 142 which are adjacent to each other. The plurality of convex portions 141, 142 and the plurality of concave portions 143, 144 referred to herein are defined by surface of one side of the gas permeable filter 14 which is facing the air inlet 12, the surface as aforementioned comprising a relatively high point which can be defined as one of the plurality of convex portions 141 (142), and the surface as aforementioned comprising a relatively low point which can be defined as one of the plurality of concave portions 143 (144). The "relatively high point" does not only refer to a highest point of the surface, similarly, the "relatively low point" does not only refer to a lowest point of the surface. Furthermore, the plurality of convex portions 141, 142 and the plurality of concave portions 143, 144 are exemplified as follows. Please refer to FIG. 1 again, in one embodiment, the plurality of convex portions 141, 142 are respectively a curved surface structure, and the plurality of concave portions 143, 144 are respectively formed by a plane which is located at one side of the gas permeable filter 14 facing the air inlet 12. To further explain, it can be clearly understandable from FIG. 2 that the planes forming the plurality of concave portions 143, 144 in this embodiment are the relatively low points at one side of the gas permeable filter 14 facing the air inlet 12, and the curved structures forming the plurality of convex portions 141, 142 respectively form the relatively high points at one side of the gas permeable filter 14 facing the air inlet 12. Please refer to FIG. 2 again, in one embodiment, each of the plurality of convex portions 141 (142) and one of the plurality of concave portions 143 (144) which is adjacent to the convex portion 141 (142) form a continuous curved surface, and the continuous curved surface is based on a sinusoidal configuration, that is, the plurality of convex portions 141, 142 and the plurality of concave portions 143, 144 form a wave-like structure at one side of the gas permeable filter 14 facing the air inlet 12. Furthermore, please refer to FIG. 3, in one embodiment, the plurality of convex portions 141, 142 are respectively a pyramid structure, and the plurality of concave portions 143, 144 are respectively a curved surface structure. Please refer to FIG. 4, in one embodiment, the plurality of convex portions 141, 142 are respectively a pyramid structure, and the plurality of concave portions 143, 144 are respectively formed by a plane of the gas permeable filter 14, and a joint 149 of each of the plurality of convex portions 141 and one of the plurality of concave portions 143 adjacent to the convex portion 141 is an arcuate surface.

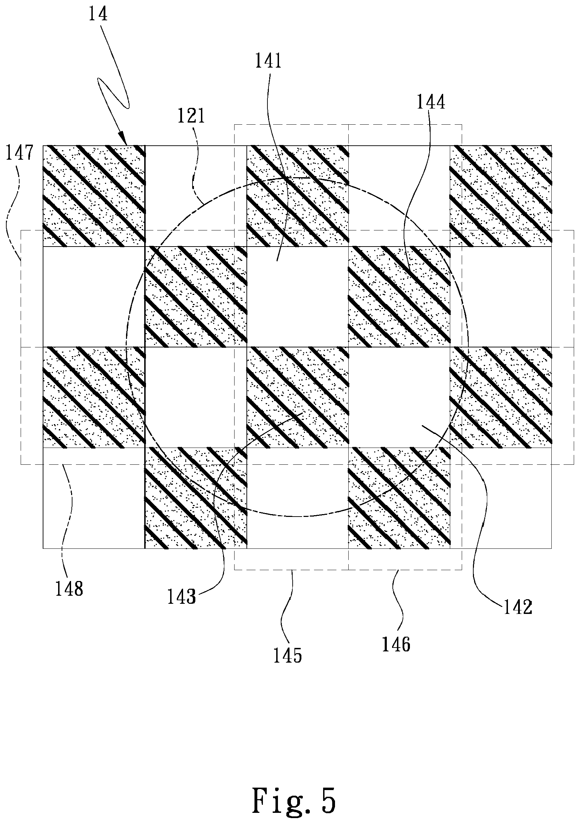

Please refer to FIGS. 1 and 5, in order to specifically describe the configurations of the plurality of convex portions 141, 142 and the plurality of concave portions 143, 144 of the present embodiment, in FIG. 5, the plurality of convex portions 141, 142 and the plurality of concave portions 143, 144 are indicated by being filled with color or not, wherein, in FIG. 5, areas unfilled with color are used as the plurality of convex portions 141, 142, and areas filled with color are used as the plurality of concave portions 143, 144. As it can be seen from the embodiment disclosed in FIG. 5, the plurality of convex portions 141, 142 and the plurality of concave portions 143, 144 are arranged in an MxN matrix, M is a sum of the plurality of convex portions 141, 142 and the plurality of concave portions 143, 144 in a same column, and N is a sum of the plurality of convex portions 141, 142 and the plurality of concave portions 143, 144 in a same row, the plurality of convex portions 141, 142 of any two adjacent rows (such as 145, 146 labeled in FIG. 5) are staggered, and the plurality of convex portions 141, 142 of any two adjacent columns (such as 147, 148 labeled in FIG. 5) are staggered.

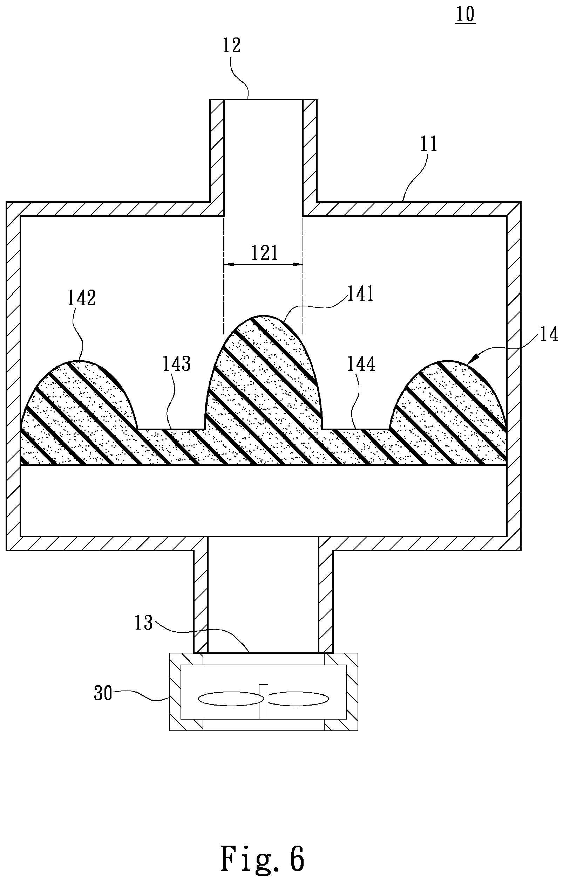

Please refer to FIG. 5 again, the air inlet 12 defines a projection range 121 facing the gas permeable filter 14, a size of the projection range 121 depends on an aperture of the air inlet 12, and the projection range 121 includes a plurality of the convex portions 141 and a plurality of the concave portions 143. Please refer to FIG. 6, in one embodiment, a height of one of the plurality of convex portions 141, 142 located in the projection range 121 is higher than heights of the plurality of convex portions 141, 142 not located in the projection range 121. In addition to the foregoing, the heights of the plurality of convex portions 141, 142 of the present invention can also be the same, as depicted in FIGS. 1, 2, 3 and 4. In addition, in one embodiment, an area of one of the plurality of convex portions 141, 142 located in the projection range 121 projected on the gas permeable filter 14 is larger than an area of the projection range 121.

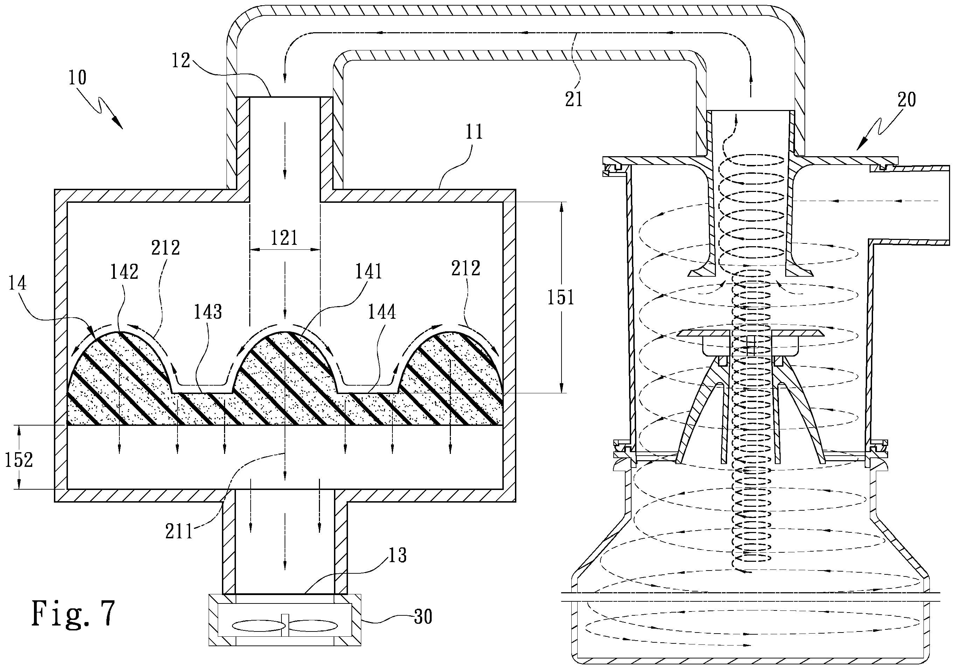

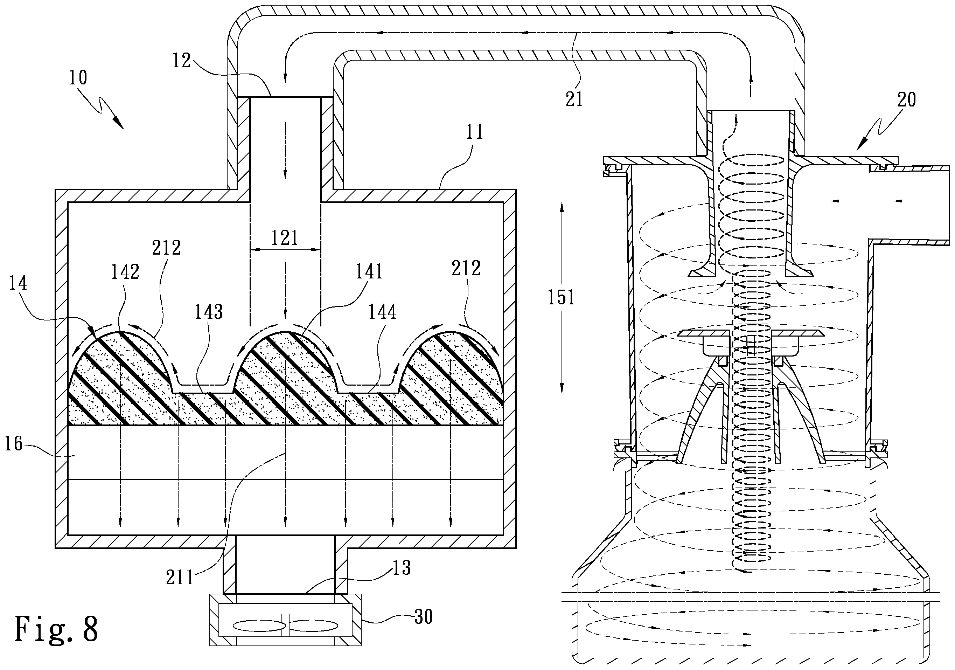

Please refer to FIGS. 7 and 8, when the present invention is implemented, the air inlet 12 receives an airflow to be filtered 21 that flows from the dust filter device 20, and the airflow to be filtered 21 is a high-pressure airflow. The airflow to be filtered 21 can be generated when the dust filter device 20 which receives a high pressure gas and discharges the dust after filtering out, or can be generated when the air extracting device 30 extracts a gas in the filter chamber 11 to form a negative pressure in the filter chamber 11. Furthermore, although the airflow to be filtered 21 has been filtered by the dust filter device 20, the airflow to be filtered 21 may still carry tiny dust that the dust filter device 20 cannot handle. After the airflow to be filtered 21 enters through the air inlet 12, the airflow to be filtered 21 flows directly toward one side of the gas permeable filter 14 provided with the plurality of convex portions 141, 142 and the plurality of concave portions 143, 144. The airflow to be filtered 21 contacting the gas permeable filter 14 is divided into a first air current 211 and a second air current 212. Specifically, the first air current 211 directly flows to the air outlet 13 through the gas permeable filter 14, and the second air current 212 flows along a surface of at least one of the plurality of convex portions 141, 142 and the plurality of concave portions 143, 144 and then flows to the air outlet 13 through the gas permeable filter 14. Wherein the second air current 212 can be referred to as a diffused air current, and when the airflow to be filtered 21 of high pressure contacts one of the plurality of convex portions 141, 142, in addition to a portion forming the first air current 211, a remaining portion will disperse all around along the surface of the gas permeable filter 14. Moreover, a flow range of the second air current 212 on the gas permeable filter 14 is greater than the projection range 121 of the air inlet 12 facing the gas permeable filter 14. As a result, the airflow to be filtered 21 passing through the gas permeable filter 14 will flow over a wider range. That is to say, the airflow to be filtered 21 penetrates not only a portion of the gas permeable filter 14, but penetrates more evenly throughout the gas permeable filter 14, so that tiny dust carried in the airflow to be filtered 21 is not only filtered by a portion of the gas permeable filter 14 which is corresponding to the projection range 121. In addition, the flow range of the second air current 212 of the present invention depends on an air pressure strength of the airflow to be filtered 21, or the length of the first spacing 151 between the gas permeable filter 14 and the air inlet 12.

Please refer to FIG. 8, in one embodiment, the exhaust filter device 10 comprises a filter 16 disposed on a side of the gas permeable filter 14 facing the air outlet 13. The filter 16 is a high-efficiency particulate air (HEPA), and a filtration efficiency of the filter 16 is more than 90%. For example, the filter 16 can be implemented by grade E11, E12, H13, H14, U15, U16 or U17. During the implementation of this embodiment, a side of the filter 16 facing the gas permeable filter 14 does not receive the first air current 211 and the second air current 212 at a single point, but is roughly equal to an area of a flow range of the second air current 212 on the gas permeable filter 14 for receiving the first air current 211 and the second air current 212. In this way, the problem of rapid failure of the filter 16 can be avoided, and the avoided problem is caused by the dust being gathered at a certain area of the filter 16 due to the air current passing through the filter 16 is too centralized.

## Claims

1. An exhaust filter device (10), comprising:
a filter chamber (11), comprising an air inlet (12) and an air outlet (13), the air inlet (12) being connected to a dust filter device (20) and receiving an airflow to be filtered (21) that flowing from the dust filter device (20); and
a gas permeable filter (14) disposed in the filter chamber (11), comprising a plurality of convex portions (141, 142) and a plurality of concave portions (143, 144) on a side of the gas permeable filter (14) facing the air inlet (12), the plurality of convex portions (141, 142) disposed at interval and the plurality of concave portions (143, 144) respectively disposed between any two of the adjacent convex portions (141, 142), the gas permeable filter (14) dividing the airflow to be filtered (21) into a first air current (211) directly flowing to the air outlet (13) through the gas permeable filter (14), and a second air current (212) flowing along a surface of at least one of the plurality of convex portions (141, 142) and the plurality of concave portions (143, 144) and flowing to the air outlet (13) through the gas permeable filter (14).

2. The exhaust filter device (10) as claimed in claim 1, wherein the air inlet (12) defines a projection range (121) facing the gas permeable filter (14), and a height of one of the plurality of convex portions (141, 142) located in the projection range (121) is higher than heights of the plurality of convex portions (141, 142) not located in the projection range (121).

3. The exhaust filter device (10) as claimed in claim 1 or 2, wherein the heights of the plurality of convex portions (141, 142) are the same.

4. The exhaust filter device (10) as claimed in any of the preceding claims, wherein the exhaust filter device (10) comprises a filter (16) disposed on a side of the gas permeable filter (14) facing the air outlet (13).

5. The exhaust filter device (10) as claimed in claim 4, wherein a filtration efficiency of the filter (16) is more than 90%.

6. The exhaust filter device (10) as claimed in any of claims 1 to 4, wherein the gas permeable filter (14) is formed with a plurality of irregularly arranged holes.

7. The exhaust filter device (10) as claimed in any of claims 1 to 4, wherein the plurality of convex portions (141, 142) and the plurality of concave portions (143, 144) are arranged in an MxN matrix, M is a sum of the plurality of convex portions (141, 142) and the plurality of concave portions (143, 144) in a same column (147 or 148), and N is a sum of the plurality of convex portions (141, 142) and the plurality of concave portions (143, 144) in a same row (145 or 146), the plurality of convex portions (141, 142) of any two adjacent rows (145, 146) are staggered, and the plurality of convex portions (141, 142) of any two adjacent columns (147, 148) are staggered.

8. The exhaust filter device (10) as claimed in any of claims 1 to 7, wherein each of the plurality of convex portions (141 or 142) and one of the plurality of concave portions (143 or 144) adjacent to the convex portion (141 or 142) form a continuous curved surface, and the continuous curved surface is based on a sinusoidal configuration.

9. The exhaust filter device (10) as claimed in any of claims 1 to 7, wherein the plurality of convex portions (141, 142) are respectively a curved surface structure, and the plurality of concave portions (143, 144) are respectively formed by a plane of the gas permeable filter (14).

10. The exhaust filter device (10) as claimed in claim 1, 2, or 3, wherein the plurality of convex portions (141, 142) are respectively a pyramid structure, and the plurality of concave portions (143, 144) are respectively a curved surface structure.

11. The exhaust filter device (10) as claimed in claim 1, 2, or 3, wherein the plurality of convex portions (141, 142) are respectively a pyramid structure, the plurality of concave portions (143, 144) are respectively formed by a surface of the gas permeable filter (14), and a joint (149) of each of the plurality of convex portions (141 or 142) and one of the plurality of concave portions (143 or 144) adjacent to the convex portion (141 or 142) is an arcuate surface.
